# EUROPÄISCHE PATENTSCHRIFT

(11) **EP 2 403 741 B1**
(45) Veröffentlichungstag und Bekanntmachung des Hinweises auf die Patenterteilung: **30.03.2016**
(21) Anmeldenummer: 10700025.9
(22) Anmeldetag: 08.01.2010
(51) Int. Cl.: B60T 8/17, B60T 8/1755

(54) **VERFAHREN ZUR STABILISIERUNG EINES KRAFTFAHRZEUGS, INSBESONDERE EINES EINSPURIGEN KRAFTFAHRZEUGS**
METHOD FOR STABILIZING A MOTOR VEHICLE, IN PARTICULAR A TWO-WHEELED MOTOR VEHICLE
PROCÉDÉ DE STABILISATION D'UN VÉHICULE À MOTEUR, EN PARTICULIER D'UN VÉHICULE À MOTEUR À ROUES ALIGNÉES

(30) Priorität: 03.03.2009 DE 102009001306
(43) Veröffentlichungstag der Anmeldung: 11.01.2012
(73) Patentinhaber: Robert Bosch GmbH, 70442 Stuttgart (DE)
(72) Erfinder: WAGNER, Marcus, 74336 Brackenheim (DE)
(86) Internationale Anmeldenummer: PCT/EP2010/050117
(87) Internationale Veröffentlichungsnummer: WO 2010/099987

(56) Entgegenhaltungen:
- WO-A1-2007/020271
- DE-A1-102005 028 995
- GB-A- 2 386 103

## Beschreibung

Die Erfindung bezieht sich auf ein Verfahren zur Stabilisierung eines Kraftfahrzeugs, insbesondere eines einspurigen Kraftfahrzeugs.

### Stand der Technik

Aus der DE 102 35 378 A1 ist ein Verfahren zur Bremsenregelung bei einem Motorrad bekannt, bei dem mittels eines Gierratensensors die Seitenneigung des Kraftfahrzeugs erfasst wird und die Bremsenregelung in Abhängigkeit von der erkannten Seitenneigung erfolgt. Damit soll ein Schleudern bzw. seitliches Wegrutschen des Motorrades bei Kurvenfahrt verhindert werden.

Aus der DE 10 2004 060 292 A1 ist ein Verfahren zur Neigungswinkelermittlung für ein Motorrad bekannt, bei dem mittels wenigstens zweier Drehratensensoren die Drehraten des Motorrads um zwei verschiedene Achsen ermittelt und aus den Drehraten der Wankwinkel sowie ggf. auch der Nickwinkel des Kraftfahrzeugs bestimmt werden.

Die DE 10 2005 028 995 A1 offenbart ein Verfahren zur Fahrdynamikregelung für Motorräder, die mit einem Kamerasystem zur Auswertung des Schräglagenwinkels des Motorrads bzw. des Nickwinkels ausgestattet sind. In Abhängigkeit des erkannten Schräglagenwinkels bzw. Nickwinkels werden Regelschwellen bestimmt, um die Fahrzeugbremse anzusteuern. Bei erkanntem Nicken des Motorrads und vorliegender Kurvenfahrt werden Stellsignale an einen Regler geschickt, der die Berechnung von ABS-Regelschwellen sowie die Druckmodulation in den Radbremsen modifiziert. Des Weiteren kann auch auf die Erzeugung des Motormoments Einfluss genommen werden.

Die GB 2 386 103 A offenbart, den Nickwinkel eines Fahrzeuges zu ermitteln und mit einem vorgegebenen Grenzwert zu vergleichen sowie gegebenenfalls Maßnahmen zur Begrenzung des Nickwinkels zu ergreifen. Aus der WO 2007/020271 A1 ist ein Verfahren zur Verhinderung bzw. Regelung des Vorderradabhebens bei Motorrädern bekannt, wobei verschiedene Referenzwerte für die Vorderradabhebewerte wählbar oder einstellbar sind.

### Offenbarung der Erfindung

Der Erfindung liegt die Aufgabe zu Grunde, mit einfachen Maßnahmen die Fahrsicherheit bei einem Kraftfahrzeug zu verbessern.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren betrifft die Stabilisierung eines Kraftfahrzeugs, insbesondere eines einspurigen Kraftfahrzeugs wie beispielsweise eines Motorrades während eines Beschleunigungsvorganges. Um nicht beherrschbare Fahrsituationen zu verhindern, wird erfindungsgemäß der aktuelle Nickwinkel des Kraftfahrzeugs bestimmt, wobei Maßnahmen getroffen werden, damit der aktuelle Nickwinkel einen Grenz-Nickwinkel nicht übersteigt. Hierzu wird im Kraftfahrzeug ein Stellelement in der Weise beaufschlagt, dass die Kraftfahrzeuglängsbeschleunigung so weit reduziert oder begrenzt wird, dass der Grenz-Nickwinkel nicht überschritten wird.

Die Begrenzung auf den Grenz-Nickwinkel erfolgt über einen Eingriff in ein Aggregat des Kraftfahrzeugs, über das die Längsbeschleunigung beeinflussbar ist. Bei diesem Aggregat handelt es sich beispielsweise um das Bremssystem des Kraftfahrzeugs zum Abbremsen des Hinterrades. In Betracht kommt auch eine Drosselung des Motormomentes, also eine Beeinflussung des Antriebsmotors, beispielsweise durch eine Begrenzung der Kraftstoffeinspritzung bzw. einer damit korrespondierenden Luftmassenbegrenzung in der Brennkraftmaschine des Kraftfahrzeugs. Diese Maßnahmen zur Reduzierung der Kraftfahrzeuglängsbeschleunigung können sowohl alternativ als auch kumulativ betrieben werden. Die durchzuführende Maßnahme kann von weiteren Zustands- oder Betriebsgrößen abhängen, beispielsweise von der absoluten Höhe der Längsbeschleunigung oder dem Anstieg der Längsbeschleunigung, wobei für eine sehr schnell durchzuführende Begrenzung des Nickwinkels vorzugsweise ein Bremseineingriff und erst anschließend eine Drosselung des Motormoments erfolgt, wohingegen bei langsamerer Annäherung an den Nickwinkel-Grenzwert eine ausschließliche Drosselung des Motormoments ausreichen kann.

Der Grenz-Nickwinkel stellt einen Grenz- bzw. Schwellenwert dar, der nicht überschritten werden darf. Hierbei kommt eine Vorgabe als feste Größe in Betracht, beispielsweise durch Begrenzung auf einen Maximalwert, der nicht überschritten werden darf. Darüber hinaus ist es auch möglich, den Grenz-Nickwinkel in Abhängigkeit der aktuellen Fahrsituation variabel zu bestimmen, insbesondere in Abhängigkeit der aktuellen Fahrzustands- bzw. Betriebsgrößen. So kann es beispielsweise zweckmäßig sein, den Grenz-Nickwinkel von einer querdynamischen Zustandsgröße abhängig zu machen, dergestalt, dass bei einem großen Wert bzw. einer ansteigenden querdynamischen Zustandsgröße der Grenz-Nickwinkel auf einen kleinen Wert gesetzt bzw. verringert wird. Damit ist sichergestellt, dass beispielsweise bei Kurvenfahrten die Stabilität des Kraftfahrzeugs gewährleistet bleibt, indem beispielsweise der Grenz-Nickwinkel auf den Wert null reduziert wird, so dass das Vorderrad Bodenkontakt hat und in der Lage ist, Seitenführungskräfte zu übertragen. Als querdynamische Zustandsgröße werden beispielsweise der Wankwinkel, die Querbeschleunigung und/oder die Gierrate des Kraftfahrzeugs berücksichtigt. Die Zustandsgrößen können sowohl einzeln als auch kumulativ in die Bestimmung des Grenz-Nickwinkels eingehen.

Gemäß einer weiteren zweckmäßigen Ausführung ist vorgesehen, dass eine Plausibilisierung von Zustandsgrößen durchgeführt wird, die bei der Ermittlung des Grenz-Nickwinkels bzw. dem Vorgang der Begrenzung des tatsächlichen Nickwinkels berücksichtigt werden. Bei der Plausibilisierung können zum einen in bestimmten Fahrsituationen gemessene Zustandsgrößen auf Plausibilität untersucht werden. So ist beispielsweise bei Geradeausfahrt im Leerlauf, also wenn keine Motormomentenanforderung vorliegt, das Kraftfahrzeug geradeaus gerichtet und befindet sich im aufrechten Zustand, so dass der Wankwinkel sowie der gemessene Wert der Längsbeschleunigung jeweils den Wert null oder annähernd null einnehmen müssen. Des Weiteren müssen die Raddrehgeschwindigkeiten am Vorderrad und am Hinterrad zumindest annähernd gleich groß sein.

Zum andern ist es auch möglich, den Ist-Nickwinkel auf zwei verschiedene Weisen zu ermitteln, wodurch die Sicherheit gegenüber Messfehlern erhöht ist. Beispielsweise wird gemäß bevorzugter Ausführung der Nickwinkel durch Integration der gemessenen Nickrate bestimmt. Zur Plausibilisierung kann aber zusätzlich ein Vergleichs-Nickwinkel aus einer weiteren Zustandsgröße des Kraftfahrzeugs bestimmt werden. Der Vergleichs-Nickwinkel wird beispielsweise aus der Längsbeschleunigung des Kraftfahrzeugs unter Berücksichtigung der Fahrzeuggeometrie bestimmt. Auch weitere Messgrößen wie z.B. die Radgeschwindigkeiten des Kraftfahrzeugs können hierbei berücksichtigt werden.

Für den Fall einer Abweichung zwischen dem aktuellen Nickwinkel und dem Vergleichs-Nickwinkel wird vorzugsweise, aus Sicherheitsgründen, der größere Nickwinkelwert berücksichtigt und dem Eingriff in ein Aggregat des Kraftfahrzeugs zu Grunde gelegt. Die Längsbeschleunigung des Kraftfahrzeugs wird daraufhin stärker reduziert werden als dies bei Zugrundelegung des kleineren Nickwinkels der Fall wäre.

Die für die Durchführung des Verfahrens erforderlichen Messwerte werden beispielsweise über eine 6D-Messtechnik ermittelt, die z.B. in einer Domain Control Unit enthalten ist. Grundsätzlich werden als erforderliche Inertialsignale nur die Nickrate benötigt, aus der durch Integration der Nickwinkel bestimmt werden kann, sowie ggf. die Längsbeschleunigung. Weitere Messsignale wie z.B. Radgeschwindigkeiten können aus einem im Fahrzeug implementierten Antiblockiersystem gewonnen werden.

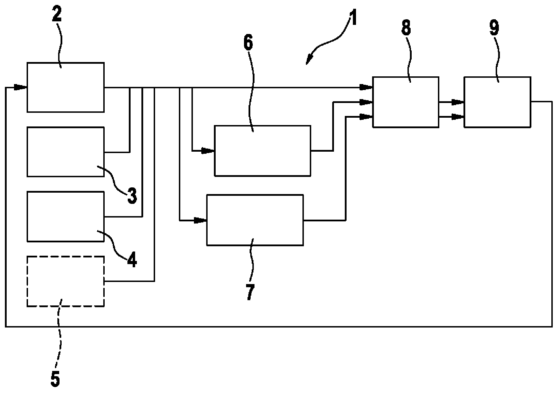

Weitere Vorteile und zweckmäßige Ausführungen sind den weiteren Ansprüchen, der Figurenbeschreibung und der Zeichnung zu entnehmen, die ein Blockschaltbild zur Regelung der Vorderradhöhe zeigt.

Wie dem Blockschaltbild 1 zu entnehmen, wird zur Regelung der Vorderradhöhe zunächst in einem ersten Block 2 der aktuelle Nickwinkel θ eines einspurigen Kraftfahrzeugs wie beispielsweise eines Motorrades bestimmt. Der Nickwinkel θ bezeichnet den Winkel, mit dem das Motorrad um eine Querachse - quer zur Fahrzeugvorwärtsrichtung - angehoben wird, wobei Nickwinkel = 0 bedeutet, dass das Vorderrad Kontakt zur Fahrbahn hat und ein Nickwinkel > 0 ein Abheben des Vorderrades von der Fahrbahn bedeutet.

Der Nickwinkel θ wird beispielsweise durch Messung der Nickrate θ und anschließender Integration der Nickrate bestimmt. In einem darauf folgenden Schritt gemäß Block 8 erfolgt eine Regelung auf einen Sollwert θ_{d} des Nickwinkels, was in einem nächsten Schritt gemäß Block 9 durch Beaufschlagen eines Aggregates im Motorrad umgesetzt wird. Als Aggregat kommt insbesondere das Bremssystem in Betracht und/oder ein Eingriff in das Motormanagement, um das Motormoment zu drosseln. Auf diese Weise wird eine Begrenzung des aktuellen Nick-winkels θ auf den Grenz-Nickwinkel θ_{d} erreicht, der somit einen Maximalwert für den Nickwinkel darstellt.

Grundsätzlich können zur Begrenzung des Nickwinkels weitere Zustandsgrößen berücksichtigt werden, was in den Blöcken 3, 4 und 5 symbolisiert ist. So kann es zweckmäßig sein, gemäß Block 3 zusätzlich die Längsbeschleunigung aₓ des Motorrades, gemäß Block 4 die Raddrehzahlen ω am Vorderrad und am Hinterrad sowie gemäß Block 5 auch die Wankrate bzw. den Wankwinkel ϕ zu berücksichtigen.

Die Berücksichtigung dieser weiteren Zustandsgrößen erfolgt insbesondere über weitere Blöcke 6 und 7, die eine Plausibilisierung von Zustandsgrößen im System bzw. eine Bedingung darstellen, die erfüllt sein muss, damit der Eingriff in das Bremssystem bzw. das Motormanagement zur Begrenzung des Nickwinkels durchgeführt wird.

Die Plausibilisierung gemäß Block 6 kann in der Weise durchgeführt werden, dass ein Vergleichs-Nickwinkel θ_{c} aus weiteren Zustandsgrößen des Motorrades bestimmt wird, wobei ein Vergleich zwischen dem Vergleichs-Nickwinkel θ_{c} und dem aktuellen Nickwinkel θ durchgeführt wird. Als weitere Zustandsgrößen, die zur Ermittlung des Vergleichs-Nickwinkels θ_{c} herangezogen werden, kommen die Längsbeschleunigung aₓ des Motorrades unter Berücksichtigung der Motorradgeometrie in Betracht sowie ggf. auch die Radgeschwindigkeiten ω.

Ergibt ein Vergleich zwischen dem aktuellen Nickwinkel θ und dem Vergleichs-Nickwinkel θ_{c}, dass eine Abweichung zwischen den Nickwinkelwerten vorliegt, so kann aus Sicherheitsgründen der größere Nickwinkelwert gewählt und der nachfolgenden Regelung gemäß Block 8 zu Grunde gelegt werden.

In der Zulassungsbedingung gemäß Block 7 wird der Grenz-Nickwinkel θ_{d} als Funktion von weiteren Zustandsgrößen im Fahrzeug ermittelt. Hierbei werden insbesondere querdynamische Zustandsgrößen berücksichtigt, beispielsweise der Wankwinkel ϕ, ggf. auch die Querbeschleunigung a_{y} oder die Gierrate ψ̇, um sicherzustellen, dass in Fahrsituationen, in welchen an den Reifen Seitenführungskräfte aufgebaut werden müssen, auch ein Kontakt zwischen dem Vorderrad und der Fahrbahn besteht; in diesem Fall wird der Grenz-Nickwinkel θ_{d} auf den Wert 0 gesetzt. Bei derartigen Fahrsituationen handelt es sich beispielsweise um Kurvenfahrten mit verhältnismäßig großem Wankwinkel ϕ und großer Quer-beschleunigung a_{y}.

Der Grenz-Nickwinkel θ_{d} kann außerdem auch als Funktion längsdynamischer Zustandsgrößen festgelegt werden. Beispielsweise kann es zweckmäßig sein, bei höheren Geschwindigkeiten aus Sicherheitsgründen nur kleinere Grenz-Nickwinkel θ_{c} zuzulassen.

Der in dem Block 7 ermittelte Wert für den Grenz-Nickwinkel θ_{c} fließt in den die Regelung symbolisierenden Block 8 ein und wird dort der Regelung zu Grunde gelegt.

## Patentansprüche

1. Verfahren zur Stabilisierung eines Kraftfahrzeugs, insbesondere eines einspurigen Kraftfahrzeugs, wobei der aktuelle Nickwinkel (θ) des Kraftfahrzeugs bestimmt und durch einen Eingriff in ein Aggregat, über das die Längsbeschleunigung (aₓ) beinflussbar ist, auf einen Grenz-Nickwinkel (θ_{d}) begrenzt wird, wobei der Grenz-Nickwinkel (θ_{d}) im laufenden Betrieb als Funktion von Zustands- bzw. Betriebsgrößen des Kraftfahrzeugs bestimmt wird und von einer querdynamischen Zustandsgröße abhängt, **dadurch gekennzeichnet, dass** als querdynamische Zustandsgröße der Wankwinkel (ϕ), die Querbeschleunigung (a_{y}) und/oder die Gierrate (*ψ̇*) berücksichtigt und mit ansteigender querdynamischer Zustandsgröße der Grenz-Nickwinkel (θ_{d}) verringert wird.

2. Verfahren nach Anspruch 1, **dadurch gekennzeichnet, dass** zur Begrenzung des Nickwinkels (θ) das Bremssystem des Kraftfahrzeugs betätigt wird.

3. Verfahren nach Anspruch 1 oder 2, **dadurch gekennzeichnet, dass** zur Begrenzung des Nickwinkels (θ) das Motormoment des Kraftfahrzeugs gedrosselt wird.

4. Verfahren nach einem der Ansprüche 1 bis 3, **dadurch gekennzeichnet, dass** die Nickrate (*θ̇*) gemessen und der aktuelle Nickwinkel (θ) durch Integration der Nickrate (*θ̇*) bestimmt wird.

5. Verfahren nach einem der Ansprüche 1 bis 4, **dadurch gekennzeichnet, dass** der Grenz-Nickwinkel (θ_{d}) von einer längsdynamischen Zustandsgröße abhängt, wobei bei mit ansteigender längsdynamischer Zustandsgröße der Grenz-Nickwinkel (θ_{d}) verringert wird.

6. Verfahren nach Anspruch 5, **dadurch gekennzeichnet, dass** als längsdynamische Zustandsgröße die Fahrzeuggeschwindigkeit (vₓ) berücksichtigt wird.

7. Verfahren nach einem der Ansprüche 1 bis 6, **dadurch gekennzeichnet, dass** der Grenz-Nickwinkel (θ_{d}) auf einen Maximalwert begrenzt wird.

8. Verfahren nach einem der Ansprüche 1 bis 7, **dadurch gekennzeichnet, dass** eine Messwert-Plausibilisierung durchgeführt wird, indem Messwerte mit bekannten Vergleichswerten verglichen werden.

9. Verfahren nach Anspruch 8, **dadurch gekennzeichnet, dass** zusätzlich ein Vergleichs-Nickwinkel (θ_{c}) aus weiteren Zustandsgrößen des Kraftfahrzeugs bestimmt wird.

10. Verfahren nach Anspruch 9, **dadurch gekennzeichnet, dass** der Vergleichs-Nickwinkel (θ_{c}) aus der Längsbeschleunigung (aₓ) des Kraftfahrzeugs bestimmt wird.

11. Verfahren nach einem der Ansprüche 8 bis 10, **dadurch gekennzeichnet, dass** bei einer Abweichung zwischen dem aktuellen Nickwinkel (θ) und dem Vergleichs-Nickwinkel (θ_{c}) der größere Nickwinkelwert verwendet wird.

12. Verfahren nach Anspruch 8, **dadurch gekennzeichnet, dass** Messwerte von Drehzahlsensoren am Vorder- und Hinterrad über die Messwerte eines Längsbeschleunigungssensors plausibilisiert werden.

13. Regel- bzw. Steuergerät, das ein Verfahren nach einem der Ansprüche 1 bis 12 ausführt.

## Claims

1. Method for stabilizing a motor vehicle, in particular a two-wheeled motor vehicle, wherein the current pitch angle (θ) of the motor vehicle is determined and is limited to a limiting pitch angle (θ_{d}) by an intervention into an assembly by means of which the longitudinal acceleration (aₓ) can be influenced, wherein the limiting pitch angle (θ_{d}) is determined as a function of state variables or operating variables of the motor vehicle during ongoing operation and depends on a lateral dynamic state variable, **characterized in that** the rolling angle (ϕ), the lateral acceleration (a_{y}) and/or the yaw rate (*ψ̇*) are taken into account as a lateral dynamic state variable, and the limiting pitch angle (θ_{d}) is reduced as the lateral dynamic state variable increases.

2. Method according to Claim 1, **characterized in that** the brake system of the motor vehicle is activated in order to limit the pitch angle (θ).

3. Method according to Claim 1 or 2, **characterized in that** the engine torque of the motor vehicle is throttled in order to limit the pitch angle (θ).

4. Method according to one of Claims 1 to 3, **characterized in that** the pitch rate (*θ̇*) is measured and the current pitch angle (θ) is determined by integration of the pitch rate (*θ̇*).

5. Method according to one of Claims 1 to 4, **characterized in that** the limiting pitch angle (θ_{d}) depends on a longitudinal dynamic state variable, wherein the limiting pitch angle (θ_{d}) is reduced as the longitudinal dynamic state variable increases.

6. Method according to Claim 5, **characterized in that** the vehicle speed (vₓ) is taken into account as a longitudinal dynamic state variable.

7. Method according to one of Claims 1 to 6, **characterized in that** the limiting pitch angle (θ_{d}) is limited to a maximum value.

8. Method according to one of Claims 1 to 7, **characterized in that** a measured-value-plausibility-checking process is carried out **in that** measured values are compared with known comparison values.

9. Method according to Claim 8, **characterized in that** in addition a comparison pitch angle (θ_{c}) is determined from further state variables of the motor vehicle.

10. Method according to Claim 9, **characterized in that** the comparison pitch angle (θ_{c}) is determined from the longitudinal acceleration (aₓ) of the motor vehicle.

11. Method according to one of Claims 8 to 10, **characterized in that** when there is a deviation between the current pitch angle (θ) and the comparison pitch angle (θ_{c}) the larger pitch angle value is used.

12. Method according to Claim 8, **characterized in that** the plausibility of measured values of rotational speed sensors at the front and rear wheels is checked by means of the measured values of a longitudinal acceleration sensor.

13. Closed-loop or open-loop control device which carries out a method according to one of Claims 1 to 12.

## Revendications

1. Procédé de stabilisation d'un véhicule automobile, en particulier d'un véhicule automobile à roues alignées, l'angle d'inclinaison (θ) du véhicule automobile étant déterminé et étant limité à un angle d'inclinaison limite (θ_{d}) par une intervention dans une unité par le biais duquel l'accélération longitudinale (aₓ) peut être influencée, l'angle d'inclinaison limite (θ_{d}) étant déterminé pendant le fonctionnement en tant que fonction de grandeurs d'état ou de grandeurs de fonctionnement du véhicule automobile et dépendant d'une grandeur d'état dynamique transversale, **caractérisé en ce que** l'angle de roulis (ϕ), l'accélération transversale (a_{y}) et/ou la vitesse de lacet (*ψ̇*) sont pris en compte en tant que grandeurs d'état dynamiques transversales et l'angle d'inclinaison limite (θ_{d}) étant réduit avec l'augmentation de la grandeur d'état dynamique transversale.

2. Procédé selon la revendication 1, **caractérisé en ce que** pour la limitation de l'angle d'inclinaison (θ), le système de freinage du véhicule automobile est actionné.

3. Procédé selon la revendication 1 ou 2, **caractérisé en ce que** pour la limitation de l'angle d'inclinaison (θ), le couple moteur du véhicule automobile est étranglé.

4. Procédé selon l'une quelconque des revendications 1 à 3, **caractérisé en ce que** le taux d'inclinaison (*θ̇*) est mesuré et l'angle d'inclinaison (θ) actuel est déterminé par intégration du taux d'inclinaison (*θ̇*).

5. Procédé selon l'une quelconque des revendications 1 à 4, **caractérisé en ce que** l'angle d'inclinaison limite (θ_{d}) dépend d'une grandeur d'état dynamique longitudinale, l'angle d'inclinaison limite (θ_{d}) étant réduit avec l'augmentation de la grandeur d'état dynamique longitudinale.

6. Procédé selon la revendication 5, **caractérisé en ce que** la vitesse du véhicule (vₓ) est prise en compte en tant que grandeur d'état dynamique longitudinale.

7. Procédé selon l'une quelconque des revendications 1 à 6, **caractérisé en ce que** l'angle d'inclinaison limite (θ_{d}) est limité à une valeur maximale.

8. Procédé selon l'une quelconque des revendications 1 à 7, **caractérisé en ce qu'**une vérification de plausibilité de valeurs de mesure est effectuée par comparaison de valeurs de mesure avec des valeurs de comparaison connues.

9. Procédé selon la revendication 8, **caractérisé en ce qu'**un angle d'inclinaison de comparaison (θ_{c}) constitué de grandeurs d'état supplémentaires du véhicule automobile est déterminé.

10. Procédé selon la revendication 9, **caractérisé en ce que** l'angle d'inclinaison de comparaison (θ_{c}) est déterminé à partir de l'accélération longitudinale (aₓ) du véhicule automobile.

11. Procédé selon l'une quelconque des revendications 8 à 10, **caractérisé en ce que** dans le cas d'un écart entre l'angle d'inclinaison actuel (θ) et l'angle d'inclinaison de comparaison (θ_{c}), la valeur d'angle d'inclinaison la plus grande est utilisée.

12. Procédé selon la revendication 8, **caractérisé en ce que** la plausibilité de valeurs de mesure de capteurs de vitesse de rotation au niveau de la roue avant et de la roue arrière est évaluée par le biais des valeurs de mesure d'un capteur d'accélération longitudinale.

13. Appareil de régulation ou de commande mettant en oeuvre un procédé selon l'une quelconque des revendications 1 à 12.
